# EUROPÄISCHE PATENTSCHRIFT

(11) **EP 3 328 786 B1**
(45) Veröffentlichungstag und Bekanntmachung des Hinweises auf die Patenterteilung: **07.09.2022**
(21) Anmeldenummer: 16751531.1
(22) Anmeldetag: 29.07.2016
(51) Int. Cl.: B67B 3/26, G01B 21/22, G01L 5/24, G01B 11/26, G01B 5/00, G01B 5/24, G01B 7/30

(54) **VERSCHLIESSWINKELMESSUNG MIT DREHMOMENT**
CLOSING ANGLE MEASUREMENT WITH TORQUE
MESURE D'UN ANGLE DE FERMETURE AVEC UN COUPLE DE ROTATION

(30) Priorität: 30.07.2015 DE 102015112574
(43) Veröffentlichungstag der Anmeldung: 06.06.2018
(73) Patentinhaber: Steinfurth Mess-Systeme GmbH, 45309 Essen (DE)
(72) Erfinder: ANGRES, Johann, 44803 Bochum (DE); FALKENSTEIN, Martin, 44795 Bochum (DE)
(74) Vertreter: Bals & Vogel Patentanwälte PartGmbB
(86) Internationale Anmeldenummer: PCT/EP2016/068242
(87) Internationale Veröffentlichungsnummer: WO 2017/017276

(56) Entgegenhaltungen:
- US-A- 5 321 935
- US-A1- 2002 116 897
- US-A1- 2002 148 205
- US-A1- 2009 293 437
- US-A1- 2012 247 064

## Beschreibung

Bei Behältern, welche mit einem Deckel verschlossen werden, ist es notwendig, das Verschließen des Deckels sicherzustellen, um z. B. den Inhalt des Behälters vor Zustandsänderung zu schützen oder ein Austreten des Inhalts aus dem Behälter zu vermeiden. Diese Problematik ist insbesondere bei Lebensmitteln von großer Bedeutung, da die zum Verzehr gedachten Produkte einwandfrei beim Konsumenten ankommen müssen. Beim Verschließen der Behälter mit Hilfe eines Deckels können durch den Produktions- und Verschlussprozess Fehler auftreten, die zu einem mangelhaften Verschließen und/oder einer Zerstörung des Deckels und/oder des Behälters führen.

Um das ordnungsgemäße Verschließen des Deckels auf dem Behälter zu überprüfen, wird nach dem Verschließen des Deckels eine Prüfung durchgeführt, bei der durch manuelle Verfahrensschritte überprüft wird, ob der Deckel den Behälter ordnungsgemäß verschließt. Dazu wird der Deckel mit einer Vorrichtung von dem Behälter gelöst und überwacht, ob ein für den korrekten Verschluss zuvor festgelegtes Drehmoment aufgebracht werden muss, um den Deckel vom Behälter zu lösen und diesen zu öffnen.

Nachteilhaft bei der Methode, welche von unterschiedlichen Mitarbeitern eines Unternehmens auch unterschiedlich ausführbar ist, ist der Einfluss bedienerabhängiger Fehler und damit verbundenen ungewünschten Toleranzen bei der Messung. Darüber hinaus ergeben sich aufgrund zahlreicher unterschiedlicher Deckelgeometrien und Werkstoffe Fehlerquellen, die durch eine manuelle Messung weiter negativ in ihrer Aussagekraft beeinflusst werden können. So kann ein Deckel, welcher eine geringe Wandstärke aufweist, durch ein zu großes Drehmoment zerstört werden, wodurch der Inhalt des Behälters durch z. B. Umwelteinflüsse gefährdet ist. Außerdem können Verunreinigungen am Behälter oder am Deckel Störgrößen darstellen, welche die Messung des Drehmoments verfälschen und die Aussagekraft der Messung weiter verschlechtern.

Die Schrift US 2002/116897 A1 offenbart eine Vorrichtung zur Messung eines Verschließwinkels eines Deckels von einem Behälter. Die Vorrichtung weist dabei ein Greifmodul zum Drehen des Deckels von einer Offenstellung in eine Schließstellung auf, wobei ein Verschließmoment und der Verschließwinkel des Deckels gemessen werden. Die Schrift US 2002/148205 A1 offenbart ein Verfahren einer Vorrichtung zum Messen eines Verschließwinkels eines Deckels für einen Behälter, wobei nach Positionieren des Behälters und Festlegen einer Startposition dieser von einer Offenstellung in eine Schließstellung gedreht wird. Somit wird ein Schließwinkel gemessen und mit sofort festgelegten Werten verglichen. Die Schrift US 5,321,935 A offenbart eine Vorrichtung zur Messung eines Verschließwinkels eines Deckels von einem Behälter. Der Deckel wird dabei von einem Greifmodul von einer Offenstellung in eine Schließstellung gedreht, wobei über einen Sensor und eine Elektronikeinheit ein Drehmoment/Drehmomentverlauf und ein Drehwinkel gemessen werden kann.

Es ist Aufgabe der vorliegenden Erfindung, die voranstehenden aus dem Stand der Technik bekannten Nachteile zumindest teilweise zu beheben. Insbesondere ist es die Aufgabe der vorliegenden Erfindung, ein Verfahren und eine Vorrichtung zu schaffen, mittels derer Messungenauigkeiten gegenüber einer manuellen Messung aus dem Stand der Technik zumindest teilweise vermieden werden und bedienerabhängige Einflüsse reduziert werden.

Des Weiteren ist es die Aufgabe, ein Verfahren zur Verfügung zu stellen, mit dem das Verschließen eines Deckels von einem Behälter zuverlässig überprüft werden kann.

Die voranstehende Aufgabe wird gelöst durch ein Verfahren mit den Merkmalen des unabhängigen Verfahrensanspruchs und einer Vorrichtung mit den Merkmalen des unabhängigen Vorrichtungsanspruchs.

Das erfindungsgemäße Verfahren zur, insbesondere automatisierten, Messung eines Verschließwinkels eines Deckels eines Behälters, insbesondere eines Flaschendeckels mit Schraubgewinde, weist die zumindest folgenden Schritte auf:
a) Positionieren des Behälters und Festlegen einer Startposition,
b) Drehen des Deckels von einer Schließstellung in Richtung einer Offenstellung des Deckels,
c) Erfassen einer Offenstellung des Deckels sowie eines entsprechenden Offenstellungswinkels,
d) Berechnen des Verschließwinkels des Deckels auf Basis des Offenstellungswinkels und insbesondere eines Deckelparameters.

Ein Kerngedanke der Erfindung liegt somit darin, durch das erfindungsgemäße Verfahren herauszufinden, ob der Deckel eines Behälters ordnungsgemäß verschlossen ist und verschlossen wurde, ohne zwangsläufig das benötigte Drehmoment für das Öffnen und Schließen des Deckels zu kennen oder zu messen. Der hierfür verwendete Verschließwinkel des Deckels bezeichnet somit den notwendigen Winkel, der ein ordnungsgemäßes Verschließen des Deckels eines Behälters sichert. Die Ermittlung des Verschließwinkels ermöglicht eine Überprüfung des korrekten Verschlusses des Behälters bei verminderter Störanfälligkeit durch Verschmutzungen oder Unregelmäßigkeiten der Geometrie des Deckels oder des Behälters an der Stelle, an welcher der Deckel auf den Behälter aufgesetzt wird. Wird eine verschlossene Flasche nach dem erfindungsgemäßen Verfahren überprüft, d. h. ob ein ordnungsgemäßes Verschließen des Deckels stattgefunden hat, so wird durch die Messung herausgefunden, ob der Verschließwinkel α ausreichend groß ist, um die gewünschte Schließstellung des Deckels zu überprüfen. Dafür wird der Behälter in einem ersten Schritt, insbesondere in einer erfindungsgemäßen (Mess-)Vorrichtung, positioniert und eine Startposition für die Messung festgelegt. Dabei kann der Behälter kraft- und/oder formschlüssig in einer entsprechenden Haltevorrichtung (der Vorrichtung) positioniert werden. Die Startposition legt dabei den Punkt fest, an dem die Messung des Winkels gestartet wird. Folglich ist es sinnvoll den Wert des Winkels an dieser Position auf "0" zu setzen. In einem nächsten Schritt wird der Deckel von einer Schließstellung in Richtung einer Offenstellung des Deckels gedreht. Dementsprechend befindet sich der Deckel in einer Stellung, in welcher die Flasche durch den festgedrehten Deckel verschlossen ist. Der Deckel wird durch ein Greifmodul (der Vorrichtung) kraft- und/oder formschlüssig gehalten und von dem Greifmodul, welches drehbar gelagert ist, von der Schließstellung in Richtung einer Offenstellung gedreht. Im Rahmen der Erfindung ist es darüber hinaus denkbar, dass der Deckel von dem Greifmodul kraft- und/oder formschlüssig gehalten wird und der Behälter von der Haltevorrichtung gedreht wird. Für die Relativbewegung zwischen Deckel und Behälter kann ein Antrieb bei der erfindungsgemäßen Vorrichtung vorgesehen sein. In einem nächsten Schritt wird die Offenstellung des Deckels sowie eines entsprechenden Offenstellungswinkels ß erfasst. Die Offenstellung des Deckels bezeichnet dabei die Stellung, in welcher der Deckel von dem Behälter entfernt werden kann und zwar insbesondere durch eine einfache Hubbewegung zum Behälter (ohne weitere Drehung). Die Offenstellung des Deckels muss dabei nicht der Stellung entsprechen, an welcher der Deckel am frühesten vom dem Behälter entfernt werden kann. Vielmehr entspricht die Offenstellung der Position bzw. der Stellung des Deckels, an welcher sichergestellt werden kann, dass ein Öffnen bzw. Entfernen des Deckels von dem Behälter, insbesondere durch eine einfache Hubbewegung, ermöglicht ist. Diese Stellung wird dadurch definiert, dass der Deckel eine Position erreicht hat, an der ein an dem Behälter vorhandenes und zum Deckel komplementär ausgebildetes Verschlusselement, insbesondere in Form eines Schraubgewindes, erreicht ist, an welchem keine Kraft mehr zwischen Deckel und Behälter ausgeübt werden kann, so dass dieser vom Behälter entfernt werden kann. Dieser Punkt kann bei einem vorhandenen Schraubgewinde, als Verschlusselement, das Ende des Gewindes (des Gewindeganges) des Behälters sein, wobei das entsprechend komplementär ausgebildete Innengewinde des Deckels das Ende des Außengewindes (des Außengewindeganges) des Behälters erreicht hat. Ein Deckelparameter ist ferner ein Wert, welcher eine Eigenschaft des Deckels, insbesondere eine geometrische Eigenschaft (unterschiedliche Formen und/oder Verschlusselemente, Durchmesser, Materialstärke etc.) des zu überprüfenden Deckels, berücksichtigt. Darüber hinaus stellt der Parameter eine Möglichkeit zur Verfügung, den Verschließwinkel α präziser zu ermitteln und die Messung, auch durch mehrere Messvorgänge, insbesondere wiederholte, zu verifizieren.

Die zeitliche Reihenfolge der Schritte a) bis d) ist dabei nicht auf die aufgeführte Reihenfolge festgelegt, sondern kann zeitlich hintereinander als auch parallel/simultan erfolgen.

Im Rahmen der Erfindung wird eine Deckelbewegung in vertikaler Richtung (Hub- bzw.

Senkbewegung) während der Durchführung der Schritte a) bis d) detektiert, insbesondere in Richtung des Bodens des Behälters während der Durchführung der Schritte b) und c). Eine Deckelbewegung in vertikaler Richtung kennzeichnet sich dadurch, dass der Deckel sich in Richtung des Bodens oder in die entgegengesetzte Richtung bewegt, so dass z. B. der Deckel von dem Behälter entfernt werden kann. Dadurch wird erreicht, dass zum einen überprüft werden kann, ob der Deckel sich während der Drehbewegung in seiner vertikalen Position verändert, so dass sich dieser von dem Behälter weg oder zum Behälter hin bewegt. Bei einem vorhandenen Schraubgewinde kann somit überprüft werden, ob abhängig von der Gewindesteigung und dem vorhandenen Drehwinkel des Deckels, eine korrekte und/oder gleichmäßige Bewegung des Deckels vollzogen wird. Wird eine Bewegung des Deckels in Richtung des Bodens (Senkbewegung) des Behälters detektiert, insbesondere während der Schritte b) und c), so kann hierdurch erfasst werden, ob eine Position des Deckels erreicht ist, bei der eine Offenstellung des Deckels sichergestellt ist. Bei einem vorhandenen Schraubgewinde des Flaschendeckels und des Behälters definiert der Punkt an dem der Deckel sich bei einer definierten Kraft, welche auf den Deckel in Richtung des Bodens des Behälters aufgebracht wird, das erste Mal von dem Ende des Gewindes bzw. des letzten Gewindeganges abrutscht (d. h. senkt) und somit in Richtung Flaschenboden sich bewegt. Dadurch ist sichergestellt, dass ein Punkt erreicht ist, an welchem der Deckel sich (in jedem Fall) von dem Behälter entfernen lässt.

Vorteilhafterweise kann ein Öffnungsdrehmoment, insbesondere ein maximales Öffnungsdrehmoment, insbesondere während der Drehbewegung im Schritt b) in Richtung Offenstellung gemessen werden. Das Öffnungsdrehmoment bezeichnet dabei das benötigte Drehmoment, welches zur Bewegung bzw. Drehung des Deckels von der Schließstellung in Richtung der Offenstellung des Deckels benötigt wird bzw. überwunden werden muss. Das maximale Öffnungsdrehmoment definiert dabei den Punkt in einem Drehmomentverlauf während der Drehbewegung des Deckels, an welchem das maximale Drehmoment benötigt wird, um den Deckel während der Drehbewegung aus der Schließstellung in die Offenstellung zu drehen. Üblicherweise befindet sich das maximale Öffnungsdrehmoment zu Anfang der Drehbewegung, an welcher der Deckel den Behälter fest verschließt und z. B. bei einem Schraubgewinde die meisten oder sämtlichen Gewindegänge des Behälters in Eingriff mit den meisten oder sämtlichen Gewindegängen des Deckels vorhanden ist. Wird das Öffnungsdrehmoment während der kompletten Drehbewegung, d. h. bis zum Erreichen des Offenstellungswinkels ß gemessen, so kann außerdem gemessen werden, ob eine Drehmomenterhöhung und/oder ein Drehmomentabfall während des Öffnungsvorgangs des Deckels auftritt. Dadurch können z. B. Fehler (Herstellfehler, Materialfehler etc.) im Deckel oder am Behälter, insbesondere am Gewinde des Deckels und/oder des Behälters, sowie Verschmutzungen festgestellt werden.

Es ist des Weiteren denkbar, dass ein Abreißmoment für eine Versiegelung des Deckels, insbesondere während der Durchführung von Schritt b) gemessen wird. Eine derartige Versiegelung (Originalitätsverschluss) stellt sicher, ob ein Deckel bereits zuvor einmal geöffnet worden ist. Dementsprechend kann während des Drehens des Deckels, ein Abreißmoment gemessen werden, bei dem eine Drehmomenterhöhung gemessen wird, welche den Punkt definiert, an dem eine Versiegelung das erste Mal vom Deckel zumindest teilweise gelöst bzw. getrennt wird. Dies kann innerhalb des Drehmomentverlaufs durch eine entsprechende Erhöhung des benötigten Drehmoments (an dieser Stelle/Winkel) gemessen werden.Dadurch kann überprüft werden, ob die Versiegelung ordnungsgemäß vor dem ersten Öffnungsvorgang vorhanden war und ob diese Versiegelung während der

Drehbewegung entsprechend gelöst wird, so dass sichergestellt ist, ob die Versiegelung einwandfrei einen Verschluss des Behälters durch den Deckel kennzeichnet.

In einem weiteren Schritt e), kann der Deckel vorteilhafterweise um zumindest 320° über die Offenstelfung hinaus in zumindest eine Kontrollstellung gedreht werden. Die Kontrollstellung definiert dabei den Punkt, an dem der Deckel zumindest ein zweites Mal eine vertikale Bewegung (Senkbewegung) in Richtung des Bodens des Behälters vollzieht. Dadurch kann überprüft werden, ob die Kontrollstellung mit der Offenstellung übereinstimmt und/oder um weichen Winkel sich die Kontrollstellung von der Offenstellung unterscheidet. Der Winkel im Schritt e) kann dabei variieren, so dass die Kontrollstellung mehrmals erreicht wird, so dass entsprechend mehrere Werte für die Kontrollstellung gemessen werden, auf deren Basis z. B. ein Mittelwert gebildet wird, welcher mit der gemessenen Offenstellung verglichen werden kann. Dementsprechend kann überprüft werden, ob die Offenstellung jeweils an dem gleichen Punkt der Deckelposition erreicht wird oder in welchem Bereich sich die Offenstellung befinden muss. Zur Ermittlung der Kontrollstellung wird, wie schon bei der Ermittlung des Verschließwinkels im Schritt d), während der Drehbewegung zumindest temporär eine Kraft auf den Deckel in Richtung Behälterboden ausgeübt.

Als Deckelparameter ist vorteilhafterweise eine Summe aus einem Deckelwinkel γ und einer Winkelkonstante, insbesondere einer Winkelkonstante von 360°, für die Berechnung des Verschließwinkels α angewendet. Der Deckelparameter dient bei der Berechnung dazu, den Verschließwinkel α exakter zu bestimmen, wobei ein Deckelwinkel γ in die Berechnung mit eingeht, welcher spezifisch auf den vorhandenen Deckel/Deckelgeometrie ausgewählt wird. Bei der Winkelkonstanten handelt es sich um den Winkel, um den der Deckel gedreht wird, wenn der Deckel das erste Mal eine vertikale Bewegung in Richtung des Bodens des Behälters vollzieht, insbesondere in Folge einer Krafteinwirkung auf den Deckel. Vorzugsweise wird eine konstante, insbesondere senkrechte Kraft auf den Deckel in Richtung Behälterboden ausgeübt zum Abrutschen (Absenken), um eine (möglichst exakt) vergleichbare Messung zu erhalten. Üblicherweise weist die Winkelkonstante einen Wert von 360° auf, so dass der Winkel zwischen der Position in der der Deckel das erste Mal vom Behälter gelöst werden kann, und dem Punkt, an dem das Abrutschen (Absenken) des Deckels, d. h. die vertikale Bewegung in Richtung Deckelboden vollzogen wird, exakt 360° und somit eine komplette Drehung des Deckels erfolgt ist. Der Deckelparameter bezeichnet somit eine Summe aus optimaler Weise der Winkelkonstante von 360° und einem definierten Deckelwinkel γ, welcher abhängig von dem eingesetzten Deckel ist. Bei der Berechnung des Verschließwinkels α wird somit der Deckelparameter, von dem gemessenen Offenstellungwinkel β subtrahiert. Dieses Ergebnis der Berechnung entspricht dann genau dem Verschließwinkel α, welcher für den vorhandenen Deckel notwendig ist, um ein ordnungsgemäßes Verschließen des Behälters durch den Deckel zu garantieren. Der Deckelwinkel γ entspricht dabei dem Winkel, welcher eine Einfädelflanke oder zumindest einen Teil der Einfädelflanke, z. B. bei einem Schraubgewinde des Deckels, bemisst. Je nach Länge der Einfädelflanke variiert dieser Wert und geht in die Berechnung mit ein. Das Design bzw. die Geometrie der Einfädelflanke kann je nach Deckelmodell variieren. Dementsprechend kann auch der Wert des Deckelwinkels γ variieren. Dabei ist es denkbar, dass der Winkelbetrag nur einen Teil der Einfädelflanke oder die gesamte Länge der Einfädelflanke bemisst. Der Deckelwinkel γ dient darüber hinaus dazu, einen Vergleich mit einer manuellen bzw. händischen Messmethode herzustellen, welche sich dadurch unterscheidet, dass unterschiedliche Punkte entlang der Einfädelflanke für die Messung herangezogen werden.

Vorteilhafterweise ist der Deckelwinkel γ zumindest ein geometrischer Wert des Deckels und entspricht einem Wert von ungefähr einem Winkel zwischen 1° und 180°, bevorzugt zwischen 5° und 50°, besonders bevorzugt zwischen 7° und 25°. Der Deckelwinkel orientiert sich somit dabei an der Länge der Einfädelflanke, welche bei z. B. bei einem Schraubgewinde am Gewinde des Deckels vorhanden ist, so dass der Anfang des Deckelgewindes in das Gewinde am Behälter eingeführt werden kann. Die Einfädelflanke und somit der Deckelwinkel variiert je nach Deckelgeometrie, so dass z. B. bei einem kleineren Deckel auch nur eine kleinere bzw. kürzere Einfädelflanke zum Einsatz kommen kann, so dass sich dadurch ein kleinerer Deckelwinkel ergeben kann. Wird der Deckel entsprechend größer dimensioniert, so kann auch ein größerer Deckelwinkel und somit eine größere Einfädelflanke zum Einsatz kommen, wodurch sich ein größerer Deckelwinkelwert ergibt. Je länger der Deckelwinkel ist, umso einfacher kann ggf. das Einfädeln des Deckels bzw. des Gewinde des Deckels in das Gewinde des Behälters sein.

Im Rahmen der Erfindung kann der Deckel zylindrisch (gemeint ist zylinderförmig), insbesondere polygonal (gemeint ist polygonförmig) ausgestaltet sein, wobei der Deckel einen Durchmesser von ungefähr zwischen 10 mm und 500 mm, bevorzugt zwischen ungefähr 20 mm und 200 mm, besonders bevorzugt zwischen 25 mm und 150 mm aufweist. Üblicherweise kommen bei Behältern, insbesondere bei Getränkebehältern, zylindrische Deckel zum Einsatz, welche ein Innengewinde aufweisen können und mit einem Außengewinde des Behälters korrelieren. Darüber hinaus ist es möglich, den Deckel polygonal, also mehreckig auszugestalten, welcher insbesondere zu Werbezwecken und beim Betätigen vorteilhaft ist, da sich eine polygonale Form von der üblichen zylindrischen Form äußerlich deutlich unterscheidet. Je nach Behältergröße bzw. Öffnungsgröße des Behälters kann der Durchmesser des Deckels variieren, so dass sowohl für kleine Öffnungen als auch für größere Öffnungen eines Behälters ein entsprechender Deckel eingesetzt werden kann und durch das erfindungsgemäße Verfahren ein entsprechender Verschließwinkel gemessen werden kann. Dafür ist das entsprechende Greifmodul bzw. die Haltevorrichtung entsprechend passend dimensioniert bzw. geometrisch komplementär ausgestaltet.

Vorteilhafterweise beträgt die Geschwindigkeit der Drehbewegung zwischen ungefähr 0,01 Umdrehung/Minute und 100 Umdrehung/Minute, bevorzugt zwischen ungefähr 0,05 Umdrehung/Minute und 50 Umdrehung/Minute, besondere bevorzugt zwischen ungefähr 0,08 Umdrehung/Minute und 20 Umdrehung/Minute, insbesondere kann die Drehzahl während der Drehbewegung variabel (insbesondere durch eine Elektronikeinheit) einstellbar sein. In Abhängigkeit der Geschwindigkeit der Drehbewegung kann das Messverfahren schneller oder langsamer durchgeführt werden. Eine schnellere Durchführung ermöglicht dementsprechend eine Zeitersparnis bei der Messung mit dem erfindungsgemäßen Verfahren, so dass in einer definierten Zeit mehrere Flaschen, mehrere Behälter und deren entsprechender Verschließwinkel des Deckels gemessen werden können. Bei einer geringeren Geschwindigkeit der Drehbewegung können genauere Messergebnisse, insbesondere an entscheidenden Stellen der Drehbewegung, detektiert bzw. gemessen werden. So kann z. B. vorteilhaft sein, die Geschwindigkeit an Punkten zu reduzieren, an welchen z. B. das maximale Öffnungsdrehmoment und/oder das Abreißmoment und/oder der Punkt erreicht ist, an dem der Deckel eine vertikale Bewegung in Richtung des Deckelbodens vollzieht. Für den während der Drehbewegung ermittelbaren Drehmomentverlauf kann es somit vorteilhaft sein, wenn an den neuralgischen Stellen der Drehbewegung die Geschwindigkeit reduziert wird, wohingegen an weniger neuralgischen Stellen der Drehbewegung die Geschwindigkeit erhöht wird, so dass eine optimale Verfahrensgeschwindigkeit einstellbar ist, in der sowohl genaue und exakte Messergebnisse als auch eine bestmögliche Geschwindigkeit für das Messverfahren erzielbar ist. Die Drehbewegung selber kann durch einen Antrieb, insbesondere in Form eines elektromechanischen Motors, erzeugt werden, der durch die Elektronikeinheit ansteuerbar ist.

Bei einem erfindungsgemäßen Verfahren kann der Deckel und/oder der Behälter zumindest eine Markierung aufweisen, wobei die Markierung optisch erfassbar und dadurch eine Deckelbewegung detektierbar ist. Durch eine optische Markierung an dem Deckel oder an dem Behälter kann somit zusätzlich optisch erfasst werden und damit die Messung präzisiert werden, dass z. B. ein optischer Sensor die Markierung an einem oder mehreren Punkten erfasst. Dementsprechend kann sowohl eine Geschwindigkeit der Deckelbewegung und/oder eine vertikale Bewegung des Deckels zusätzlich optisch erfasst werden. Dies ermöglicht z. B. auf einfache Weise die Überprüfung der Winkelkonstanten und dadurch die Genauigkeit des Deckelparameters, welcher aufgrund der optischen Markierung einfach erfassbar ist. Dabei kann z. B. erfasst werden, ob die Markierung an einem Deckel und eine Markierung an dem Behälter zum Zeitpunkt der Deckelbewegung in vertikaler Richtung und einer anschließenden Drehung um 360° des Deckels am gleichen Punkt der Markierung erneut stattfindet.

Ein weiterer Aspekt der Erfindung betrifft eine Vorrichtung zur, insbesondere automatisierten, Messung eines Verschließwinkels eines Deckels eines Behälters, insbesondere eines Deckels mit Schraubgewinde, aufweisend zumindest eine Haltevorrichtung zur Positionierung des Behälters, zumindest ein Greifmodul zur kraft- und/oder formschlüssigen Aufnahme des Deckels des Behälters, einen

Drehmomentsensor zumindest zum Messen eines Öffnungsdrehmomentes des Deckels, einen Winkelsensor zur Erfassung zumindest von einem Offenstellungswinkel, einen Höhensensor zur Erfassung von zumindest einer Deckelbewegung, zumindest einen der folgenden Sensoren: Temperatursensor, Drucksensor zur Erfassung zumindest eines Innendrucks des Behälters und/oder des Deckels; sowie zumindest eine Elektronikeinheit und zumindest einen Antrieb.

Die Haltevorrichtung zur Positionierung des Behälters ist dabei vorteilhafterweise derart, insbesondere mit verstellbaren Halteelementen und/oder -backen, ausgestaltet, dass der Behälter kraft- und/oder formschlüssig von der Haltevorrichtung fixiert werden kann. Dabei kann die Haltevorrichtung den Behälter an einer oder mehreren Positionen, insbesondere vollumfänglich und/oder im Bodenbereich, einklemmen. Dabei kann die Haltevorrichtung eine Vorspannkraft aufweisen, so dass der Behälter in die Haltevorrichtung gegen eine Vorspannkraft eingeklemmt werden muss. Darüber hinaus ist es möglich, dass die Haltevorrichtung in einer Ausgangsposition keinen Kontakt zum Behälter aufweist und erst zum Start einer Messung die Haltevorrichtung den Behälter kraft- und/oder formschlüssig hält. Dafür kann die Haltevorrichtung ein oder mehrere Halteelemente aufweisen, welche den Behälter an unterschiedlichen Stellen fixieren. Vorzugsweise befindet sich die Haltevorrichtung im Bereich des Bodens des Behälters, wobei jedoch auch eine Positionierung entlang des Behälterkörpers vorstellbar ist. Üblicherweise weist der Behälter jedoch an dem Boden die größte Formstabilität auf, so dass es sinnvoll ist, an dieser Stelle eine Haltevorrichtung anzusetzen.

Des Weiteren weist die erfindungsgemäße Vorrichtung ein Greifmodul zur kraft- und/oder formschlüssigen Aufnahme des Deckels des Behälters auf. Das Greifmodul kann dabei ähnlich wie die Haltevorrichtung mit einer Vorspannkraft vorgespannt sein, so dass bei Aufsetzen des Greifmoduls auf den Deckel die Vorspannkraft überwunden werden muss und dadurch der Deckel in das Greifmodul eingeklemmt wird. Dafür kann das Greifmodul z. B. eine konisch zulaufende Form aufweisen, so dass der Deckel soweit in das Greifmodul eintauchen muss, bis ein kraft- und/oder formschlüssiger Halt erreicht wird. Darüber hinaus kann das Greifmodul auch mehrere Greifelemente aufweisen, welche erst bei Start der Messung eine kraft- und/oder formschlüssige Aufnahme des Behälters vollzieht. Dabei kann das Greifmodul bzw. die Greifelemente den Deckel an mehreren Stellen oder vollumfänglich aufnehmen.

Ein Drehmomentsensor bei der erfindungsgemäßen Vorrichtung dient zumindest zum Messen eines Öffnungsdrehmomentes des Deckels. Das Öffnungsdrehmoment definiert dabei das Drehmoment, welches benötigt wird, um die Öffnungsbewegung des Deckels vorzunehmen. Darüber hinaus kann der Drehmomentsensor einen Drehmomentverlauf während der Öffnungsbewegung messen, so dass an mehreren Stellen während der Drehbewegung das Drehmoment gemessen wird und anhand des Verlaufs festgestellt werden kann, ob ein ordnungsgemäßer Öffnungsvorgang oder ein Abreißmoment für das (Originalitäts-)Siegel erreicht wird. Dementsprechend kann im Drehmomentverlauf eine Zunahme oder ein Abfallen des Drehmoments Aufschluss über entsprechende Positionen während der Drehbewegung geben.

Ein Winkelsensor dient zur Erfassung von zumindest einem Offenstellungswinkel des Deckels, der eine Offenstellung des Deckels wiedergibt. Darüber hinaus kann ein Winkelsensor während der Drehbewegung konstant oder an mehreren Punkten den Winkel des Deckels erfassen. Dabei kann der Winkelsensor z. B. die Drehbewegung des Greifmoduls und/oder der Haltevorrichtung erfassen. Kommt sowohl ein Drehmomentsensor als auch ein Winkelsensor zum Einsatz, so kann der Verlauf des gemessenen Drehmoments sowie der Winkelverlauf miteinander verglichen werden, so dass an der entsprechenden Winkelposition das dazugehörige Drehmoment zugeordnet werden kann. Daraus ergeben sich zusätzliche Informationen für die Drehbewegung des Deckels, welche Aufschluss über den Offenstellungswinkel geben können.

Ein Höhensensor dient zur Erfassung von zumindest einer Deckelbewegung, insbesondere in vertikaler Richtung, so dass ein Absenken des Deckels in Richtung des Bodens des Behälters als auch eine Steigbewegung des Deckels entgegengesetzt zum Boden des Behälters gemessen werden kann. Dadurch kann überprüft werden, ob der Deckel bei einer Drehbewegung in die Offenstellung sich vom Behälter weg, d. h. entgegen der Richtung des Behälterbodens bewegt. Somit kann z. B. auch detektiert werden, ob eine Bewegung bei einem Schraubgewinde des Behälters und des Deckels entsprechend des Steigungswinkels des Deckels vollzogen wird. Neben dem Absenken des Deckels bei Erreichen des Offenstellungswinkels oder einer Kontrollstellung kann auch detektiert werden, an welchem Punkt der Deckel keine Veränderung der vertikalen Bewegung mehr vollzieht. Ein Temperatursensor dient dabei dazu, die Temperatur des Deckels und/oder des Behälters und/oder des Inhalts des Behälters zu messen. Der Temperatursensor kann bspw. dazu dienen, eine Temperaturerhöhung zu messen, welche aufgrund von Reibung in Folge eines entsprechenden Öffnungsdrehmoments entsteht, zu messen, so dass durch die gemessene Temperatur weitere Informationen für den Öffnungsvorgang gesammelt werden können. Ein Drucksensor dient zur Erfassung zumindest eines Innendrucks des Behälters oder eines Drucks des Deckels. Der Innendruck des Behälters ist je nach Inhalt des Behälters für eine Überprüfung des korrekten Verschlusses des Behälters entscheidend. Somit kann durch ein Erfassen des Innendrucks detektiert werden, an welchem Punkt der Innendruck des Behälters abfällt, d. h. an welcher Position des Deckels ein Druck aus dem Behälter entweichen kann. Ein Drucksensor kann aber auch den Druck des Deckels messen, welcher von dem Behälter auf den Deckel ausgeübt wird oder umgekehrt, oder welcher Druck bzw. welche Kraft von dem Greifmodul auf den Deckel ausgeübt wird, damit eine vertikale Bewegung des Deckels bei Erreichen des Offenstellungswinkels erreicht wird. Hierbei ist auch eine rein optische Druckmessung des geschlossenen Behälters durch einen optischen Messsensor ggf. in Kombination mit einer Lichtquelle denkbar.

Als Drehmomentsensor kann vorteilhafterweise ein Drehmomentaufnehmer, insbesondere zumindest ein Dehnungsmessstreifen (DMS) und/oder ein piezoelektrischer Drehmomentaufnehmer und/oder magnetoelastischer Drehmomentaufnehmer eingesetzt werden. Insbesondere ist der Drehmomentsensor an dem Greifmodul und/oder an der Haltevorrichtung angeordnet. Ein Drehmomentaufnehmer kann dabei das Öffnungsdrehmoment und/oder das maximale Öffnungsdrehmoment während der Drehbewegung messen, wobei ein Dehnungsmessstreifen in dem Greifmodul und/oder in der Haltevorrichtung angeordnet wird, insbesondere in den Halteelementen oder den Greifelementen angeordnet werden. Die Dehnungsmessstreifen geben dabei präzise ein entsprechendes anliegendes Drehmoment bei gleichzeitig kompakter Bauweise an. Bei einem piezoelektrischen Drehmomentaufnehmer wird in Folge einer Krafteinwirkung durch das Drehmoment eine elektrische Spannung erzeugt, welche in ein entsprechendes Drehmoment umgerechnet werden kann. Dabei kann ein piezoelektrischer Drehmomentaufnehmer z. B. in dem Greifmodul und/oder in der Haltevorrichtung angeordnet werden, so dass bei einer Drehbewegung die auf den piezoelektrischen Drehmomentaufnehmer auswirkende Kraft in eine entsprechende Spannung umgewandelt werden kann. Ein magnetoelastischer Drehmomentaufnehmer misst in Folge eines angelegten magnetischen Felds die Deformation eines magnetischen Werkstoffs. Dabei erfährt der Sensor bei konstantem Volumen eine elastische Längenänderung, wobei die Änderung des magnetischen Feldes in ein entsprechendes Drehmoment umgewandelt bzw. umgerechnet werden kann. Ein optischer bzw. optoelektronischer Sensor kann Licht unter Benutzung des photoelektrischen Effekts in ein elektrisches Signal umwandeln oder ein von der einfallenden Strahlung abhängigen elektrischen Widerstand zeigen. So kann z. B. eine Verformung des Deckels und/oder des Behälters durch einen optischen Sensor detektiert werden und somit von diesem in ein entsprechendes Drehmoment umgerechnet werden. Besonders bevorzugt ist es, dass der Drehmomentsensor an dem Greifmodul und an der Haltevorrichtung angeordnet ist. So ist eine kompakte Bauweise der Vorrichtung ermöglicht und eine präzise Messung des Drehmoments an dem Greifmodul und/oder an der Haltevorrichtung gewährleistet. Der Drehmomentsensor kann darüber hinaus ein Schrittmotor sein, welcher sowohl als Antrieb als auch als Sensor dient. Dabei können die einzelnen Schritte des Schrittmotors als auch die Stromaufnahme des Schrittmotors bzw. eines normalen E-Motors gemessen werden, so dass bei einer entsprechenden Kraft der dazugehörige Strom des Motors gemessen und verglichen werden kann, woraufhin ein Drehmoment und insbesondere ein Drehmomentverlauf gemessen werden kann. So kann z. B. eine Erhöhung des benötigten Drehmoments durch eine Erhöhung der benötigten Stromaufnahme des Motors gemessen werden. Gleichzeitig kann aufgrund des Schrittmotors und der Messung der zurückgelegten Schritte ein Winkel gemessen werden, welcher von dem Schrittmotor während des Drehmomentverlaufs vollzogen wird. Dementsprechend kann ein Schrittmotor und/oder E-Motor sowohl als Winkelsensor als auch als Drehmomentsensor eingesetzt werden.

Im Rahmen der Erfindung kann der Winkelsensor ein Drehwinkelgeber, insbesondere ein Inkrementalgeber sein, insbesondere kann der Winkelsensor an dem Greifmodul und/oder an der Haltevorrichtung angeordnet sein. Ein Drehwinkelgeber kann z. B. über Schleifkontakte die Drehbewegung und somit den Winkel des Deckels messen. Darüber hinaus ist eine photoelektrische Abtastung möglich, insbesondere bei einer Markierung an Deckel oder am Behälter kann optisch und somit photoelektrisch gemessen werden. Die Schleifkontakte oder eine magnetische Abtastung können z. B. an dem Greifmodul und/oder an der Haltevorrichtung vollzogen werden, so dass bei einer Drehbewegung des Greifmoduls und/oder der Haltevorrichtung eine entsprechende magnetische Abtastung oder eine Widerstandsänderung an einem Inkrementalgeber gemessen werden. Darüber hinaus ist es denkbar, dass ein Schrittmotor als Winkelsensor zum Einsatz kommt, wobei ein definierter Schritt einen zugeordneten Winkel aufweist, so dass bei einer Erfassung der zurückgelegten Schritte des Schrittmotors auf einen Winkel geschlossen werden kann.

Im Rahmen der Erfindung kann der Höhensensor ein Wegsensor, insbesondere ein induktiver und/oder ein kapazitiver und/oder ein optischer Wegsensor sein, insbesondere kann der Höhensensor in einem Führungselement angeordnet sein, wobei insbesondere an dem Führungselement zumindest das Greifmodul und/oder die Haltevorrichtung angeordnet ist. Bei einem Wegsensor als Höhensensor wird der zurückgelegte Weg des Deckels gemessen, welcher insbesondere in vertikaler Richtung vollzogen wird. Dabei kann der Wegsensor ein induktiver oder ein kapazitiver oder ein optischer Wegsensor sein, so dass ein magnetisches Feld bei einer induktiven Messung aufgrund der Höhenänderung des Deckels detektiert werden kann. Bei einem kapazitiven Wegsensor bzw. Höhensensor wird die Veränderung der Kapazität in Folge der Höhenänderung des Deckels gemessen. Ein optischer Sensor kann dabei durch Abtastung des Deckels und/oder einer Markierung des Deckels und/oder des Behälters eine Höhenänderung und somit eine Positionsänderung des Deckels detektieren. Besonders vorteilhaft ist es, dass der Höhensensor an einem Führungselement angeordnet ist. Dabei kann das Führungselement derart ortsfest angeordnet sein, dass bei einer Bewegung des Deckels entlang des Führungselements je nach Art des Sensors eine Veränderung z. B. der Kapazität oder des magnetischen Feldes gemessen werden kann. Besonders bevorzugt ist es, dass an dem Führungselement das Greifmodul und/oder die Haltevorrichtung angeordnet ist. Dementsprechend ergibt sich eine kompakte Bauform, bei der das Greifmodul die Haltevorrichtung und die Elektronikeinheit an dem Führungselement angeordnet werden können. Das Führungselement kann dabei als ein Gestell für die Messvorrichtung dienen, an dem die Bauteile fest oder reversibel angeordnet werden können.

Im Rahmen der Erfindung kann der Temperatursensor zumindest ein Heißleiter, Kaltleiter, Halbleiter, Thermoelement, optischer Sensor oder ein Bimetall sein. In Abhängigkeit des gewünschten Punktes an dem eine Temperatur gemessen werden soll, kann es sinnvoll sein, unterschiedliche Temperatursensoren einzusetzen, so kann z. B. bei einer berührungslosen Temperaturmessung ein optischer Sensor vorteilhaft sein. Kostengünstig lassen sich Temperatursensoren z. B. als Bimetall, als Heißleiter, als Kaltleiter, als Halbleiter oder als Thermoelement realisieren.

Es kann vorteilhaft sein, dass der Drucksensor zumindest ein piezoresistiver Sensor, piezoelektrischer, ein Hallelement, kapazitiver Sensor, optischer Sensor oder ein induktiver Sensor ist. Dabei können auch mehrere unterschiedliche Formen von Drucksensoren zum Einsatz kommen. Induktive, optische, kapazitive Sensoren und Hallelemente ermöglichen dabei eine kontaktlose Messung des Drucks und können somit vorteilhaft sein. Wenn an der entsprechenden Messstelle kein Kontakt an das zu messende Fluid oder zu messende Element besteht. Ein piezoresistiver Sensor oder ein piezoelektrischer Sensor kann hingegen zum Einsatz kommen, wenn der Sensor Kontakt zu dem zu messenden Element oder Bauteil hat, was z. B. bei einer Druckmessung des Deckels von dem Greifmodul auf den Deckel vorteilhaft sein kann.

Im Rahmen der Erfindung ist es denkbar, dass zumindest ein Sensor in den Antrieb integriert ist. Dabei kann es sich auch um eine Sensorfunktion handeln, welche von dem Antrieb bereitgestellt wird. Bspw. kann es sich hierbei um einen Schrittmotor handeln, welcher neben dem Antrieb für z. B. eine Drehbewegung oder eine horizontale Bewegung, neben den zurückgelegten Schritten auch den entsprechenden Winkel messen kann. Darüber hinaus kann in den Antrieb auch ein Drehmoment gemessen werden, wobei bei einer Erhöhung der Stromaufnahme des Antriebs auf ein entsprechendes Drehmoment geschlossen werden kann. Damit vereint eine Sensorfunktion bzw. ein Sensor in dem Antrieb mehrere Funktionen, so dass eine kompakte Bauweise und kostengünstige Realisierung der Vorrichtung erzielbar ist.

Vorteilhafterweise kann die Elektronikeinheit ein Bedienelement und/oder ein Anzeigeelement aufweisen. Dabei dient das Bedienelement z. B. dazu, den Messvorgang zu starten, zu stoppen und/oder zu unterbrechen. Dabei ist es denkbar, dass über das Bedienelement z. B. ebenfalls ein die Geschwindigkeit der Drehbewegung, ein aufzubringendes Drehmoment bzw. eine Haltekraft für das Greifmodul und/oder die Haltevorrichtung gesteuert werden kann. Dementsprechend können über das Bedienelement sämtliche für die Messung benötigten Bauteile, wie die Haltevorrichtung, das Greifmodul oder der Antrieb, geregelt und/oder gesteuert werden. Das Anzeigeelement dient dabei dazu, z. B. den Drehmomentverlauf, den Verlauf der Drehgeschwindigkeit oder anderer Messsignale der zum Einsatz kommenden Sensoren optisch darstellen zu können. Somit kann z. B. von einem Bediener kontrolliert werden, ob bei der Messung Fehler auftreten bzw. dass die Messung korrekt abläuft. Zweckmäßigerweise sind die genannten Sensoren zumindest teilweise datentechnisch und/oder auch elektrisch mit der Elektronikeinheit verbindbar und können ihre Messdaten zur weiteren Verarbeitung und Speicherung an die Elektronikeinheit übermitteln. Hierfür können die Sensoren kabelgebunden oder auch drahtlos mit der Elektronikeinheit zusammenwirken, was auch für die bereits genannten Aktoren, wie z. B. Antrieb, Greifmodul und/oder Haltevorrichtung etc. gilt.

Es ist des Weiteren denkbar, dass die Elektronikeinheit einen Speicher aufweist, in den das erfindungsgemäße Verfahren speicherbar ist. Dementsprechend ist die Vorrichtung und/oder die Elektronikeinheit derart ausgestaltet, dass ein Verfahren gemäß des unabhängigen Verfahrensanspruchs ausführbar ist. Ferner kann die Elektronikeinheit über eine Schnittstelle zu einem externen Datenaustausch verfügen.

Die erfindungsgemäße Vorrichtung und/oder das erfindungsgemäße Verfahren ermöglicht den zumindest teilweise automatischen (gemeint ist: nicht händischen) Einsatz in der Serienfertigung (z. B. einer Abfüllanlage für Behälter) und kann somit in einer Fertigungslinie integriert werden. Damit ist ein deutlicher Sicherheits- und Zeitgewinn verbunden. Auch ist es denkbar das Verfahren und die Vorrichtung als Stand-Alone-Verfahren bzw. Stand-Alone-System zu betreiben, um z. B. Stichproben von unterschiedlichen Fertigungslinien, insbesondere automatisch, zu überprüfen.

Durch die in den abhängigen Ansprüchen aufgeführten Maßnahmen sind vorteilhafte Weiterbildungen und Verbesserungen der in den unabhängigen Ansprüchen angegebenen Vorrichtung und des Verfahrens möglich. Weitere Merkmale und Details der Erfindung ergeben sich aus der Beschreibung und den Zeichnungen. Dabei gelten Merkmale und Details, die im Zusammenhang mit der erfindungsgemäßen Verfahren beschrieben worden sind, selbstverständlich auch im Zusammenhang mit der erfindungsgemäßen Vorrichtung und jeweils umgekehrt, so dass bezüglich der Offenbarung zu den einzelnen Erfindungsaspekten stets wechselseitig Bezug genommen wird bzw. werden kann.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Dabei ist zu beachten, dass die Figuren nur beschreibenden Charakter haben und nicht dazu gedacht sind, die Erfindung in irgendeiner Form einzuschränken. Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen. Es zeigen jeweils schematisch:
- Fig.1: eine erste Ausführungsform der erfindungsgemäßen Vorrichtung, wobei der Behälter sich in der Schließstellung I befindet,
- Fig.2: die Ausführungsform der erfindungsgemäßen Vorrichtung aus Fig. 1, wobei der Behälter sich in der Offenstellung II befindet,
- Fig. 3: ein Ablaufdiagramm des erfindungsgemäßen Verfahrens und
- Fig. 4: eine erfindungsgemäße Ermittlung des Verschließwinkels α grafisch veranschaulicht.

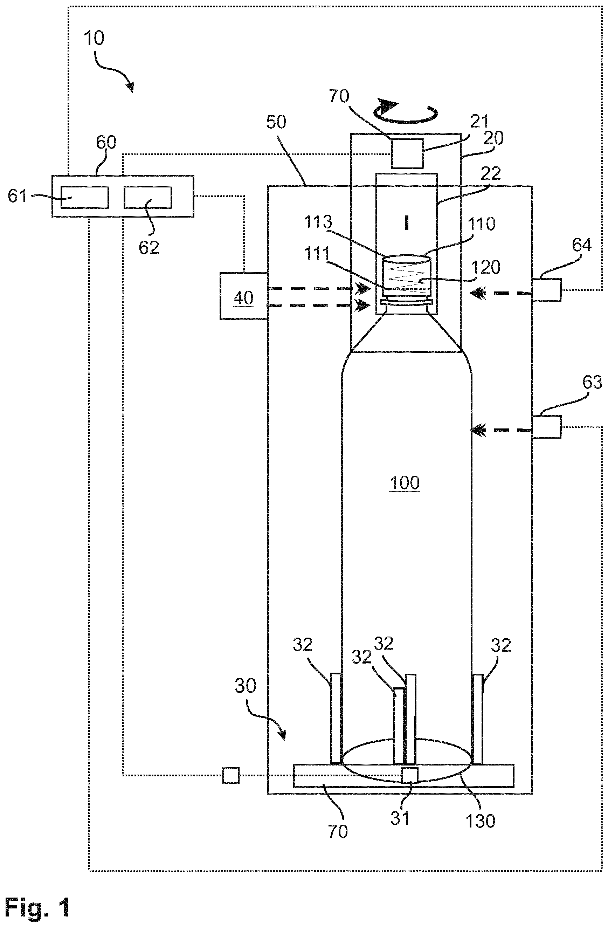

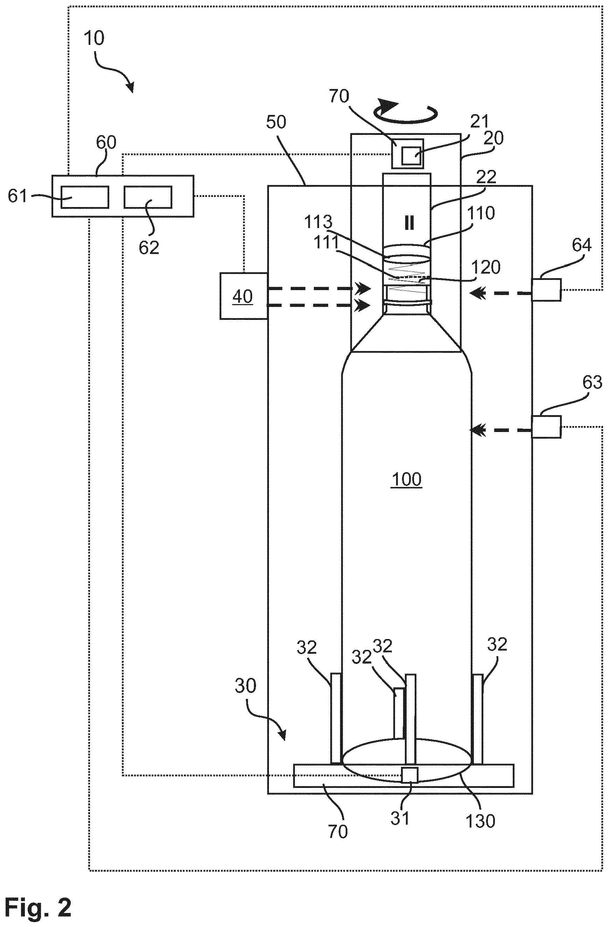

In Fig. 1 ist eine Ausführungsform der erfindungsgemäßen Vorrichtung 10 zum Messen eines Verschließwinkels α des Deckels 110, welcher sich in der Schließstellung I auf dem Behälter 100 befindet, gezeigt. Der Behälter 100 ist hierbei ein Getränkebehälter in Form einer Flasche 100, die im oberen Bereich des Behälters 100, dem Behälterhals oder Flaschenhals, eine Öffnung 113 aufweist durch die z.B. eine Flüssigkeit eingefüllt und entleert werden kann. Der Deckel 110 ist in der Fig. 1 derart am Flaschenhals und der Öffnung 113 positioniert, dass er in der gezeigten Schließstellung I, die Öffnung 113 der Flasche weitestgehend fluiddicht verschließt. Dazu ist der Deckel 110 auf das Gewinde 120 im Bereich der Öffnung 113 des Behälters 100 geschraubt. Ebenfalls im Bereich des Behälterhalses ist das Greifmodul 20 der Messvorrichtung 10 an dem Führungselement 50 angeordnet, wobei sich ein Teil des Greifmoduls 20 über den Behälterhals und insbesondere über den Deckel 110 erstreckt, so dass der Deckel 110 vom Greifmodul 20 umfasst ist. Das Greifmodul 20 kann dabei z. B. zylinderförmig gestaltet sein und einen Innendurchmesser aufweisen, der größer ist als der Durchmesser des Deckels 110. Somit wird erreicht, dass das Greifmodul 20 den Deckel 110 aufnehmen und der Öffnungsvorgang eingeleitet werden kann. Dafür ist auf der Innenseite des Greifmoduls 20 ein Mechanismus 22 vorgesehen, mittels welchem der Deckel 110 fixiert und kraftschlüssig und/oder formschlüssig gehalten werden kann. Der Mechanismus 22 kann z. B. eine konisch zulaufende Form des Greifmoduls 20 oder ein bewegbarer Mechanismus, wie hier dargestellt, sein, der den Deckel 110 nach einer Betätigung umfasst, so dass ein Kraft- und/oder Formschluss erst nach Betätigung erreicht wird (Fig. 2). Das Greifmodul 20 ist in Fig. 1 drehbar gelagert, wodurch ein Öffnungsvorgang des Deckels 110 durch eine Drehbewegung des Greifmoduls 20, angetrieben von dem Antrieb 70, in die entsprechende Öffnungsrichtung dazu führt, dass der Deckel 110 sich über das Gewinde 120 in Richtung Offenstellung II bewegt. An dem Deckel 110 befindet sich eine Versiegelung 111, die vollumfänglich im unteren Bereich des Deckels 110, wo sich die Öffnung des Deckels 110 befindet, materialeinheitlich mit dem Deckel 110 ausgebildet ist. Die Versiegelung 111 zeigt an, ob der Verschluss bereits geöffnet worden ist, wobei in Fig. 1 die Versiegelung noch nicht beschädigt ist, also der Deckel noch nicht geöffnet wurde. Des Weiteren befindet sich ein Winkelsensor 21 an dem Greifmodul 20, über den die Drehbewegung des Greifmoduls 20 detektiert und gemessen wird. Der Winkelsensor 21 ist mit der Elektronikeinheit 60 in Signalverbindung und kann von dieser auch mit Energie versorgt werden. Die Elektronikeinheit 60 dient zum einen zur Verarbeitung der von den Sensoren 21, 31 und 41 ermittelten Daten und darüber hinaus kann die Vorrichtung über das Bedienelement 61 bedient und gesteuert werden. Über das Anzeigeelement 62 der Elektronikeinheit 60, kann z. B. ein Drehmomentverlauf, der Drehwinkel oder u. a. Informationen vom Höhensensor 40 sowie die Messdaten der Sensoren insbesondere bei jedem Drehwinkel dargestellt bzw. angezeigt werden. Selbstverständlich kann auch von der Elektronikeinheit 60 anhand der gemessenen und der teilweise vorgegebenen Werte das ordnungsgemäße Verschließen des Behälters festgestellt und über das Anzeigeelement 62 angezeigt werden. Der Höhensensor 40 ist in Fig. 1 an dem Führungselement 50 derart angeordnet, positioniert und mit der Elektronikeinheit 60 signalverbunden, dass sich der Höhensensor 40 im Bereich des Deckels 110 und der Öffnung des Behälters 100 befindet. Das ermöglicht eine exakte Messung der Bewegung des Deckels 110 in vertikaler Richtung sowohl in Richtung Offenstellung II als auch in Richtung Schließstellung I, also Behälterboden 130. Im Bereich des Behälterbodens 130 in die Haltevorrichtung 30 angeordnet, in der der Behälter 100 durch die Haltevorrichtung 30 positioniert und/oder fixiert werden kann. Dafür hat die Haltevorrichtung 30 in Fig. 1 vier Halteelemente 32 welche den Behälter 100 an vier Stellen im Bereich des Behälterbodens 130 positionieren und kraft- und/oder formschlüssig fixieren. Der Behälter 100 wird durch die vier Halteelemente 32 in seiner Position derart fixiert, dass bei einer Öffnungsbewegung des Greifmoduls 20, der Behälter seine Ausgangsposition nicht verlässt. Das durch die Drehbewegung auf den Behälter 100 ausgeübte Drehmoment, wird durch den Drehmomentsensor 31 gemessen. Auch der Drehmomentsensor 31 ist in Signalverbindung mit der Elektronikeinheit 60 und kann bei Bedarf auch von dieser mit Energie versorgt werden. Auch die Haltevorrichtung 30 ist an dem Führungselement 50 angeordnet, so dass sich eine kompakte Messvorrichtung ergibt, mit der sämtliche Komponenten 20, 30, 40, 50, 60 verbunden sind. Darüber hinaus zeigt die Fig.1 einen Temperatursensor 63 und einen Drucksensor 64, welche beide an dem Führungselement 50 angeordnet sind.

Die Fig. 2 zeigt die erfindungsgemäße Vorrichtung 10 in der Ausführungsform der Fig. 1, wobei sich der Deckel 110 in der Offenstellung II befindet. In der Offenstellung II ist es möglich, den Deckel 110 vom Behälter 100 zu entfernen, da das Innengewinde des Deckels 110 nicht mehr mit dem Gewinde 111 des Behälters 100 in Wirkverbindung steht. Das Greifmodul 20 hat durch eine kraftschlüssige Verbindung mit dem Deckel 110, welches mit dem Mechanismus 22 erzielt wird, diesen in der durch den Pfeil gezeigten Richtung über den Antrieb 70, um zumindest den Öffnungswinkel gedreht, so dass der Deckel 110 über das Gewinde 111 sich in die gezeigte Offenstellung II bewegt hat. Dabei hat der Deckel 110 in Folge der rotatorischen Bewegung des Deckels 110, eine vertikale Bewegung nach oben, also entgegengesetzt zum Behälterboden 130, vollzogen. Diese kommt durch die Steigung des Gewindes 111 des Behälters 110 zustande, entlang dessen sich der Deckel 110 in die Offenstellung II bewegt. Diese vertikale Bewegung wird durch den Höhensensor 40 detektiert und gemessen. Somit kann die veränderte Höhe des Deckels 110 (insbesondere für jeden Drehwinkel) festgehalten werden und bei konstanter Messung eine Bewegungsform ermittelt werden. Parallel dazu wird durch den Winkelsensor 21 der zurückgelegte Winkel des Deckels 110 gemessen, welcher in Folge der Drehbewegung des Greifmoduls 20 und damit auch des Deckels 110, vollzogen wird. In Verbindung mit den Daten des Höhensensors 40, kann dadurch ermittelt werden, welche Bewegungsform der Deckel 110 vollzogen hat. Ist der Deckel 110 gleichmäßig entlang des Gewindes 111 nach oben bewegt worden, oder gab es Abweichungen bei der Bewegungsform, wodurch z. B. auf ein Fehler am Gewinde 111 des Behälters 110 oder am Gewinde des Deckels 110 geschlossen werden kann. Darüber hinaus zeigt die Fig. 2 einen Temperatursensor 63 und einen Drucksensor 64, welche beide an dem Führungselement 50 angeordnet sind.

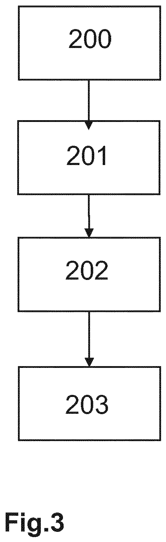

In der Fig. 3 ist eine Ausführungsform des erfindungsgemäßen Verfahrens als Ablaufdiagramm abgebildet, wobei im Schritt 200 die Positionierung des Behälters und das Festlegen einer Startposition durchgeführt wird. Mit dem Schritt 201 wird das Drehen des Deckels von einer Schließstellung in Richtung einer Offenstellung des Deckels bezeichnet. In dem Schritt 202 wird eine Offenstellung des Deckels sowie eines entsprechenden Offenstellungswinkels β erfasst. Der darauf folgende Schritt 203 kennzeichnet das Berechnen des Verschließwinkels des Deckels auf Basis des Offenlegungswinkels und insbesondere eines Deckelparameters. Die Reihenfolge der Schritte ist dabei nicht auf die aufgezeigte Reihenfolge festgelegt, sondern kann zeitlich hintereinander als auch parallel/simultan erfolgen.

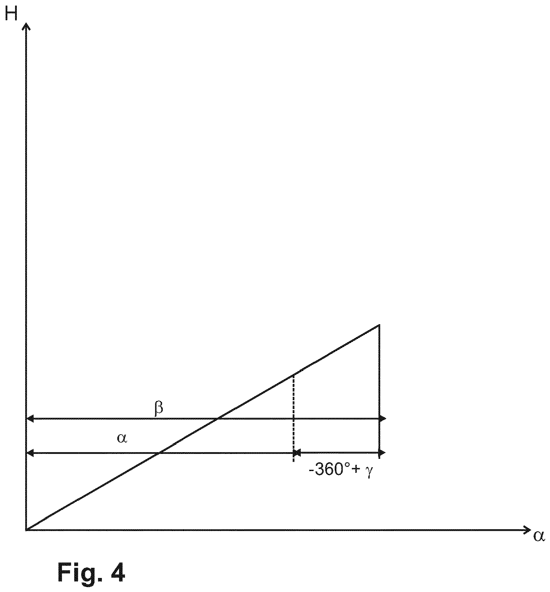

Die Fig. 4 zeigt die Höhe d. h. die vertikale Position des Deckels (y-Achse) im Verlauf der Drehbewegung entsprechend des Winkels α (x-Achse) in einem Koordinatensystem schematisch. Der Offenstellungswinkel β bezeichnet damit den Punkt an dem ein Abfall des Deckels detektiert wird. Der Abfall und somit die vertikale Bewegung in Richtung des Bodens des Behälters definiert somit den Endpunkt der Steigung des gezeigten Graphen, woraus sich ein Offenstellungswinkel β ergibt. Zur Ermittlung des Verschließwinkels α wird nun vom Offenstellungswinkel β der Deckelparameter subtrahiert, so dass sich der Verschließwinkel α ergibt, welcher entlang des aufgezeigten Graphen durch eine gestrichelte vertikale Linie dargestellt wird.

### Bezugszeichenliste

- 10: Messvorrichtung
- 20: Greifmodul
- 21: Winkelsensor
- 22: Mechanismus
- 30: Haltevorrichtung
- 31: Drehmomentsensor
- 40: Höhensensor
- 50: Führungselement
- 60: Elektronikeinheit
- 61: Bedienelement
- 62: Anzeigeelement
- 63: Temperatursensor
- 64: Drucksensor
- 70: Antrieb
- 100: Behälter
- 110: Deckel
- 111: Versiegelung
- 112: Markierung
- 113: Öffnung
- 120: Schraubgewinde
- 130: Behälterboden
- α: Verschließwinkel
- β: Offenstellungswinkel
- γ: Deckelwinkel
- I: Schließstellung
- II: Offenstellung
- 200: Verfahrensschritt a)
- 201: Verfahrensschritt b)
- 202: Verfahrensschritt c)
- 203: Verfahrensschritt d)

## Patentansprüche

1. Verfahren zur, insbesondere automatisierten, Messung eines Verschließwinkels eines Deckels (110) eines Behälters (100), insbesondere eines Flaschendeckels (110) mit Schraubgewinde (120), aufweisend die zumindest folgenden Schritte:
a) Positionieren des Behälters (100) und Festlegen einer Startposition,
b) Drehen des Deckels (110) von einer Schließstellung (I) in Richtung einer Offenstellung (II) des Deckels (110),
c) Erfassen einer Offenstellung (II) des Deckels (110) sowie eines entsprechenden Offenstellungswinkels β,
d) Berechnen des Verschließwinkels α des Deckels (110) auf Basis des Offensteilungswinkels β und insbesondere eines Deckelparameters,
wobei ein Deckelparameter ein Wert ist, welcher eine geometrische Eigenschaft des zu überprüfenden Deckels (110) berücksichtigt, wobei der Deckelparameter eine Summe aus einem Deckelwinkel γ, welcher abhängig von dem eingesetzten Deckel (110) ist, und einer Winkelkonstante von 360° ist, wobei bei der Berechnung des Verschließwinkels α der Deckelparameter von dem gemessenen Offenstellungswinkel β subtrahiert wird, wobei das Ergebnis der Berechnung genau dem Verschließwinkel α entspricht, welcher für den vorhandenen Deckel (110) notwendig ist, um ein ordnungsgemäßes Verschließen des Behälters durch den Deckel (110) zu garantieren,
**dadurch gekennzeichnet, dass**
eine Deckelbewegung in vertikaler Richtung während der Durchführung der Schritte a) bis d) detektiert wird, in Richtung des Bodens (130) des Behälters während der Durchführung der Schritte b) und c) zum Überprüfen ob eine korrekte und/oder gleichmäßige Bewegung des Deckels (110) vollzogen wird, und zur Sicherstellung der Offenstellung des Deckels (110).

2. Verfahren nach Anspruch 1,
**dadurch gekennzeichnet,**
**dass** ein Öffnungsdrehmoment, insbesondere ein maximales Öffnungsdrehmoment, insbesondere während der Drehbewegung b) in Richtung Offenstellung (II) gemessen wird.

3. Verfahren nach einem der vorhergehenden Ansprüche,
**dadurch gekennzeichnet,**
**dass** ein Abreißmoment für eine Versiegelung (111) des Deckels (110), insbesondere während der Durchführung von Schritt b), gemessen wird.

4. Verfahren nach einem der vorhergehenden Ansprüche,
**dadurch gekennzeichnet,**
**dass** in einem weiteren Schritt e), der Deckel (110) um zumindest 320° über die Offenstellung (II) hinaus in zumindest eine Kontrollstellung (III) gedreht wird.

5. Verfahren nach Anspruch 1,
**dadurch gekennzeichnet,**
**dass** der Deckel (110) zylindrisch, insbesondere polygonal, ausgestaltet ist, wobei der Deckel (110) einen Durchmesser von ungefähr zwischen 10 mm und 500 mm, bevorzugt zwischen ungefähr 20 mm und 200 mm, besonders bevorzugt zwischen 25 mm und 150 mm aufweist.

6. Verfahren nach einem der vorhergehenden Ansprüche,
**dadurch gekennzeichnet,**
**dass** der Deckelwinkel γ zumindest ein geometrischer Wert des Deckels (110) ist, und einem Wert von ungefähr zwischen 1° und 180°, bevorzugt zwischen 5° und 50°, besonderes bevorzugt zwischen 7° und 25° entspricht und/oder dass die Drehbewegung zwischen ungefähr 0,01 U/min und 100 U/min, bevorzugt zwischen ungefähr 0,05 U/min und 50 U/min, besonders bevorzugt zwischen ungefähr 0,08 U/min und 20 U/min aufweist, insbesondere dass die Drehzahl während der Drehbewegung variabel einstellbar ist.

7. Verfahren nach einem der vorhergehenden Ansprüche,
**dadurch gekennzeichnet,**
**dass** der Decke! (110) und/oder der Behälter (100) zumindest eine Markierung (112) aufweist, wobei die Markierung (112) optisch erfassbar und dadurch eine Deckelbewegung detektierbar ist.

8. Vorrichtung (10) zur, insbesondere automatisierten, Messung eines Verschließwinkels eines Deckels (110) eines Behälters (100), insbesondere eines Flaschendeckels (110) mit Schraubgewinde (120), aufweisend
zumindest eine Haltevorrichtung (30) zur Positionierung des Behälters (100), zumindest ein Greifmodul (20) zur kraft- und/oder formschlüssigen Aufnahme des Deckels (110) des Behälters (100),
zumindest einen Drehmomentsensor (31) zum Messen eines Öffnungsdrehmomentes des Deckels (110),
einen Winkelsensor (21) zur Erfassung zumindest von einem Offenstellungswinkel, einen Höhensensor (40) zur Erfassung von zumindest einer Deckelbewegung, zumindest einen der folgenden Sensoren: Temperatursensor (63), Drucksensor (64) zur Erfassung zumindest eines Innendrucks des Behälters (100) und/oder des Deckels (110),
sowie zumindest eine Elektronikeinheit (60) und zumindest einen Antrieb (70) zum Drehen des Deckels (110),
wobei die Elektronikeinheit dazu konfiguriert ist den Antrieb (70) zu steuern,
wobei die Elektronikeinheit mit den Sensoren verbunden ist,
wobei die Vorrichtung konfiguriert ist, das Verfahren nach Anspruch 1 durchzuführen.

9. Vorrichtung (10) nach Anspruch 8 (nach dem unabhängigen Vorrichtungsanspruch),
**dadurch gekennzeichnet,**
**dass** der Drehmomentsensor (31) ein Drehmomentaufnehmer ist, insbesondere zumindest ein Dehnungsmessstreifen und/oder ein piezoelektrische Drehmomentaufnehmer und/oder magnetoelastischer Drehmomentaufnehmer und/oder optischer Drehmomentaufnehmer, insbesondere dass der Drehmomentsensor (31) an dem Greifmodul (20) und/oder an der Haltevorrichtung (30) angeordnet ist.

10. Vorrichtung (10) nach einem der vorhergehenden Ansprüche,
**dadurch gekennzeichnet,**
**dass** der Winkelsensor (21) ein Drehwinkelgeber, insbesondere ein Inkrementalgeber ist, insbesondere dass der Winkelsensor (21) an dem Greifmodul (20) und/oder an der Haltevorrichtung (30) angeordnet ist.

11. Vorrichtung (10) nach einem der vorhergehenden Ansprüche,
**dadurch gekennzeichnet,**
**dass** der Höhensensor (40) ein Wegsensor, insbesondere ein induktiver und/oder ein kapazitiver und/oder ein optischer Wegsensor ist, insbesondere dass der Höhensensor (40) an einem Führungselement (50) angeordnet ist, wobei insbesondere an dem Führungselement (50) zumindest das Greifmodul (20) und/oder die Haltevorrichtung (30) angeordnet ist.

12. Vorrichtung (10) nach einem der vorhergehenden Ansprüche,
**dadurch gekennzeichnet,**
**dass** der Temperatursensor zumindest ein Heißleiter, Kaltleiter, Halbleiter, Thermoelement, optischer Sensor oder ein Bimetall ist und oder dass der Drucksensor zumindest ein piezoresistiver Sensor, piezoelektrischer, Hallelement, kapazitiver Sensor, optischer Sensor oder ein induktiver Sensor ist.

13. Vorrichtung (10) nach einem der vorhergehenden Ansprüche,
**dadurch gekennzeichnet,**
**dass** zumindest ein Sensor (21, 31, 40) in den Antrieb integriert ist.

14. Vorrichtung (10) nach einem der Ansprüche 8 bis 13,
**dadurch gekennzeichnet,**
**dass** die Elektronikeinheit (60) ein Bedienelement (61) und/oder ein Anzeigeelement (62) aufweist und/oder dass die Elektronikeinheit (60) einen Speicher aufweist, in dem das erfindungsgemäße Verfahren speicherbar ist.

## Claims

1. Method for, in particular automated, measurement of a closure angle of a lid (110) of a container (100), in particular a bottle lid (110) with a screw thread (120), comprising at least the following steps:
a) positioning the container (100) and defining a start position,
b) rotating the lid (110) from a closed position (I) towards an open position (II) of the lid (110),
c) detecting an open position (II) of the lid (110) and a corresponding open position angle β,
d) calculating the closure angle α of the lid (110) based on the open position angle β and in particular a lid parameter,
wherein a lid parameter is a value which takes into account a geometrical property of the lid (110) to be inspected, the lid parameter being a sum of a lid angle γ, which is dependent on the inserted lid (110), and an angular constant of 360°,
wherein in the calculation of the closure angle α the lid parameter is subtracted from the measured open position angle β, the result of the calculation corresponding exactly to the closure angle α which is necessary for the existing lid (110) to guarantee a proper closure of the container by the lid (110),
**characterized in that**
a lid movement is detected in the vertical direction during the execution of steps a) to d), in the direction of the bottom (130) of the container during the execution of steps b) and c) for checking whether a correct and/or uniform movement of the lid (110) is performed, and for ensuring the open position of the lid (110).

2. The method of claim 1,
**characterized in that**
an opening torque, in particular a maximum opening torque, is measured, in particular during the rotary movement b) in the direction of the open position (II).

3. The method according to any one of the preceding claims,
**characterized in that**
a breakaway torque for a seal (111) of the lid (110) is measured, in particular during the performance of step b).

4. The method according to any one of the preceding claims,
**characterized in that**
in a further step e), the lid (110) is rotated by at least 320° beyond the open position (II) into at least one control position (III).

5. The method of claim 1,
**characterized in that**
the lid (110) is cylindrical, in particular polygonal, in shape, the lid (110) having a diameter of approximately between 10 mm and 500 mm, preferably between approximately 20 mm and 200 mm, particularly preferably between 25 mm and 150 mm.

6. The method according to any one of the preceding claims,
**characterized in that**
the lid angle γ is at least one geometric value of the lid (110) and corresponds to a value of approximately between 1° and 180°, preferably between 5° and 50°, particularly preferably between 7° and 25°, and/or **in that** the rotary movement has between approximately 0.01 rpm and 100 rpm, preferably between approximately 0.05 rpm and 50 rpm, particularly preferably between approximately 0.08 rpm and 20 rpm, in particular **in that** the rotational speed is variably adjustable during the rotary movement.

7. The method according to any one of the preceding claims,
**characterized in that**
the lid (110) and/or the container (100) has at least one marking (112), it being possible for the marking (112) to be detected optically and for a lid movement to be detected as a result.

8. Device (10) for, in particular automated, measurement of a closure angle of a lid (110) of a container (100), in particular a bottle lid (110) with a screw thread (120), comprising at least one holding device (30) for positioning the container (100),
at least one gripping module (20) for non-positively and/or positively receiving the lid (110) of the container (100),
at least one torque sensor (31) for measuring an opening torque of the lid (110),
an angle sensor (21) for detecting at least one open position angle, a height sensor (40) for detecting at least one lid movement, at least one of the following sensors:
temperature sensor (63), pressure sensor (64) for detecting at least an internal pressure of the container (100) and/or the lid (110),
as well as at least one electronic unit (60) and at least one drive (70) for rotating the lid (110),
wherein the electronic unit is configured to control the drive (70),
wherein the electronic unit is connected to the sensors,
wherein the device is configured to perform the method of claim 1.

9. The device (10) according to claim 8 (according to the independent device claim), **characterized in that**
the torque sensor (31) is a torque transducer, in particular at least one strain gauge and/or a piezoelectric torque transducer and/or magnetoelastic torque transducer and/or optical torque transducer, in particular **in that** the torque sensor (31) is arranged on the gripping module (20) and/or on the holding device (30).

10. The device (10) according to any one of the preceding claims,
**characterized in that**
the angle sensor (21) is a rotation angle encoder, in particular an incremental encoder, in particular **in that** the angle sensor (21) is arranged on the gripping module (20) and/or on the holding device (30).

11. The device (10) according to any one of the preceding claims,
**characterized in that**
the height sensor (40) is a displacement sensor, in particular an inductive and/or a capacitive and/or an optical displacement sensor, in particular **in that** the height sensor (40) is arranged on a guide element (50), at least the gripping module (20) and/or the holding device (30) being arranged in particular on the guide element (50).

12. The device (10) according to any one of the preceding claims,
**characterized in that**
the temperature sensor is at least a hot conductor, a cold conductor, a semiconductor, a thermocouple, an optical sensor or a bimetal, and or **in that** the pressure sensor is at least a piezoresistive sensor, a piezoelectric sensor, a Hall element, a capacitive sensor, an optical sensor or an inductive sensor.

13. The device (10) according to any one of the preceding claims,
**characterized in that**
at least one sensor (21, 31, 40) is integrated in the drive.

14. The device (10) according to any one of claims 8 to 13,
**characterized in that**
the electronic unit (60) has an operating element (61) and/or a display element (62) and/or **in that** the electronic unit (60) has a memory in which the method according to the invention can be stored.

## Revendications

1. Procédé de mesure, en particulier automatisée, d'un angle de fermeture d'un couvercle (110) d'un récipient (100), en particulier d'un couvercle de bouteille (110) avec un filet de vis (120), présentant au moins les étapes suivantes :
a) positionner le récipient (100) et définir une position de départ,
b) rotation du couvercle (110) d'une position de fermeture (I) vers une position d'ouverture (II) du couvercle (110),
c) détecter une position d'ouverture (II) du couvercle (110) ainsi qu'un angle de position d'ouverture correspondant β,
d) calculer l'angle de fermeture α du couvercle (110) sur la base de l'angle de position d'ouverture β et, en particulier, d'un paramètre de couvercle,
un paramètre de couvercle étant une valeur qui tient compte d'une propriété géométrique du couvercle (110) à contrôler, le paramètre de couvercle étant une somme d'un angle de couvercle γ, qui dépend du couvercle (110) inséré, et d'une constante angulaire de 360°,
dans lequel, lors du calcul de l'angle de fermeture α, le paramètre de couvercle est soustrait de l'angle de position d'ouverture mesuré β, le résultat du calcul correspondant exactement à l'angle de fermeture α qui est nécessaire pour le couvercle existant (110) afin de garantir une fermeture correcte du récipient par le couvercle (110),
**caractérisé en ce**
**qu'**un mouvement du couvercle est détecté dans le sens vertical pendant l'exécution des étapes a) à d), en direction du fond (130) du récipient pendant l'exécution des étapes b) et c) pour vérifier si un mouvement correct et/ou régulier du couvercle (110) est effectué, et pour assurer la position d'ouverture du couvercle (110).

2. Procédé selon la revendication 1,
**caractérisé en ce**
**qu'**un couple d'ouverture, en particulier un couple d'ouverture maximal, est mesuré en particulier pendant le mouvement de rotation b) en direction de la position d'ouverture (II).

3. Procédé selon l'une quelconque des revendications précédentes,
**caractérisé en ce**
**qu'**un couple d'arrachement pour un scellement (111) du couvercle (110) est mesuré, en particulier pendant l'exécution de l'étape b).

4. Procédé selon l'une quelconque des revendications précédentes,
**caractérisé en ce**
**que** dans une autre étape e), le couvercle (110) est tourné d'au moins 320° au-delà de la position d'ouverture (II) dans au moins une position de contrôle (III).

5. Procédé selon la revendication 1,
**caractérisé en ce**
**que** le couvercle (110) est de forme cylindrique, en particulier polygonale, le couvercle (110) présentant un diamètre compris approximativement entre environ 10 mm et 500 mm, de préférence entre environ 20 mm et 200 mm, de manière particulièrement préférée entre 25 mm et 150 mm.

6. Procédé selon l'une quelconque des revendications précédentes,
**caractérisé en ce**
**que** l'angle de couvercle γ est au moins une valeur géométrique du couvercle (110) et correspond à une valeur comprise approximativement entre 1° et 180°, de préférence entre 5° et 50°, de manière particulièrement préférée entre 7° et 25° et/ou en ce que le mouvement de rotation présente entre environ 0,01 tr/min et 100 tr/min, de préférence entre environ 0,05 tr/min et 50 tr/min, de manière particulièrement préférée entre environ 0,08 tr/min et 20 tr/min, en particulier en ce que la vitesse de rotation peut être réglée de manière variable pendant le mouvement de rotation.

7. Procédé selon l'une quelconque des revendications précédentes,
**caractérisé en ce**
**que** le couvercle (110) et/ou le récipient (100) présente au moins un marquage (112), le marquage (112) pouvant être détecté optiquement et un mouvement du couvercle pouvant ainsi être détecté.

8. Dispositif (10) pour la mesure, en particulier automatisée, d'un angle de fermeture d'un couvercle (110) d'un récipient (100), en particulier d'un couvercle de bouteille (110) avec un filet de vis (120), présentant
au moins un dispositif de maintien (30) pour le positionnement du récipient (100),
au moins un module de préhension (20) pour recevoir le couvercle (110) du récipient (100) par force et/ou par forme,
au moins un capteur de couple (31) pour mesurer un couple d'ouverture du couvercle (110),
un capteur angulaire (21) pour détecter au moins un angle de position d'ouverture, un capteur de hauteur (40) pour détecter au moins un mouvement du couvercle, au moins l'un des capteurs suivants : capteur de température (63), capteur de pression (64) pour détecter au moins une pression interne du récipient (100) et/ou du couvercle (110), ainsi qu'au moins une unité électronique (60) et au moins un entraînement (70) pour faire tourner le couvercle (110),
dans lequel l'unité électronique est configurée pour commander l'entraînement (70), l'unité électronique étant reliée aux capteurs,
dans lequel le dispositif est configuré pour mettre en oeuvre le procédé selon la revendication 1.

9. Dispositif (10) selon la revendication 8 (selon la revendication indépendante du dispositif),
**caractérisé en ce**
**que** le capteur de couple (31) est un transducteur de couple, en particulier au moins une jauge de contrainte et/ou un capteur de couple piézoélectrique et/ou un capteur de couple magnétoélastique et/ou un capteur de couple optique, en particulier que le capteur de couple (31) est disposé sur le module de préhension (20) et/ou sur le dispositif de maintien (30).

10. Dispositif (10) selon l'une quelconque des revendications précédentes,
**caractérisé en ce**
**que** le capteur angulaire (21) est un capteur d'angle de rotation, en particulier un capteur incrémental, en particulier que le capteur angulaire (21) est disposé sur le module de préhension (20) et/ou sur le dispositif de maintien (30).

11. Dispositif (10) selon l'une quelconque des revendications précédentes,
**caractérisé en ce**
**que** le capteur de hauteur (40) est un capteur de déplacement, en particulier un capteur de déplacement inductif et/ou un capteur de déplacement capacitif et/ou un capteur de déplacement optique, en particulier que le capteur de hauteur (40) est disposé sur un élément de guidage (50), au moins le module de préhension (20) et/ou le dispositif de maintien (30) étant notamment disposés sur l'élément de guidage (50).

12. Dispositif (10) selon l'une quelconque des revendications précédentes,
**caractérisé en ce**
**que** le capteur de température est au moins une thermistance chaude, une thermistance froide, un semi-conducteur, un thermocouple, un capteur optique ou un bimétal et ou en ce que le capteur de pression est au moins un capteur piézorésistif, piézoélectrique, un élément à effet Hall, un capteur capacitif, un capteur optique ou un capteur inductif.

13. Dispositif (10) selon l'une quelconque des revendications précédentes,
**caractérisé en ce**
**qu'**au moins un capteur (21, 31, 40) est intégré dans l'entraînement.

14. Dispositif (10) selon l'une quelconque des revendications 8 à 13,
**caractérisé en ce**
**que** l 'unité électronique (60) présente un élément de commande (61) et/ou un élément d'affichage (62) et/ou que l'unité électronique (60) présente une mémoire dans laquelle le procédé selon l'invention peut être enregistré.
